# EUROPEAN PATENT APPLICATION

(11) **EP 3 989 629 A1**
(43) Date of publication of application: **27.04.2022**
(21) Application number: 19934172.8
(22) Date of filing: 19.06.2019
(51) Int. Cl.: H04W 16/28, H04W 88/02

(54) **TERMINAL AND COMMUNICATION METHOD**

(71) Applicant: NTT DOCOMO, INC., Chiyoda-Ku Tokyo 100-6150 (JP)
(72) Inventor: KAKISHIMA, Yuichi, Tokyo 100-6150 (JP); MATSUMURA, Yuki, Tokyo 100-6150 (JP)
(74) Representative: Hoffmann Eitle
(86) International application number: PCT/JP2019/024392
(87) International publication number: WO 2020/255313

(57) **Abstract**

A terminal including a reception unit configured to receive a plurality of resources from a base station device, a control unit configured to select one or more resources among the plurality of resources based on a reception quality of the plurality of resources, and a transmission unit configured to transmit information of the one or more resources to the base station device is provided.

## Description

### TECHNICAL FIELD

The present invention relates to a terminal (a user equipment) and a communication method in a wireless communication system.

### BACKGROUND ART

In New Radio (NR) (which is also referred to as "5G") which is a successor system to Long Term Evolution (LTE), a technology called beam management is employed. In the beam management, at least one of a base station and a mobile station forms a beam to improve a transmission quality (for example, Non-Patent Document 1 and Non-Patent Document 2).

### CITATION LIST

### NON-PATENT DOCUMENT

Non-Patent Document 1: 3GPP TS 38.213 V15.5.0 (2019-03)
Non-Patent Document 2: 3GPP TS 38.214 V15.5.0 (2019-03)

### SUMMARY OF THE INVENTION

### PROBLEM TO BE SOLVED BY THE INVENTION

For example, in a wireless communication system in which a base station side (a transmitting side) can configure four beams, and a user equipment side (a receiving side) can configure two beams, beam sweeping (sweeping) is performed on both the transmitting side and the receiving side, and an appropriate pair is selected from a total of eight transmission/reception beam pair candidates.

However, information which is to be fed back from the user equipment to select an appropriate pair is not specified in detail.

The present invention has been made in light of the foregoing, and it is an object of the present invention to enable a user equipment to feed back appropriate information so that an appropriate transmission/reception beam pair can be selected in a wireless communication system.

### MEANS FOR SOLVING PROBLEM

According to the technology of the disclosure, a terminal including a reception unit configured to receive a plurality of resources from a base station device, a control unit configured to select one or more resources among the plurality of resources based on a reception quality of the plurality of resources, and a transmission unit configured to transmit information of the one or more resources to the base station device is provided.

### EFFECT OF THE INVENTION

According to the technology of the disclosure, it is possible to enable a user equipment to feed back appropriate information so that an appropriate transmission/reception beam pair can be selected in a wireless communication system.

### BRIEF DESCRIPTION OF DRAWINGS

Fig. 1 is a diagram illustrating a wireless communication system according to an embodiment of the present invention;
Fig. 2 is a diagram illustrating transmission/reception beam pairs;
Fig. 3 is a diagram illustrating SU-MIMO;
Fig. 4 is a diagram illustrating MU-MIMO;
Fig. 5 is a diagram illustrating feedback of beam information according to an embodiment of the present invention;
Fig. 6 is a diagram illustrating user equipment pairing in MU-MIMO;
Fig. 7 is a diagram illustrating an example of beam grouping;
Fig. 8 is a diagram illustrating an example of a desired beam and an interference beam;
Fig. 9 is a diagram illustrating an example of a desired beam and an interference beam;
Fig. 10 is a diagram illustrating an example of a functional configuration of a base station device 10 according to an embodiment of the present invention;
Fig. 11 is a diagram illustrating an example of a functional configuration of a user equipment 20 according to an embodiment of the present invention; and

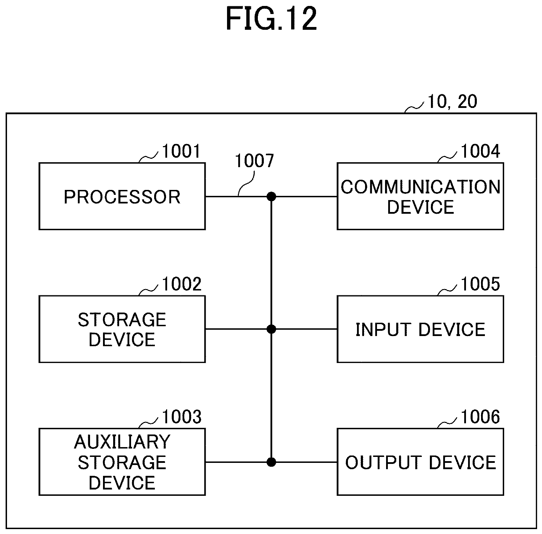

Fig. 12 is a diagram illustrating an example of a hardware configuration of a base station device 10 or a user equipment 20 according to an embodiment of the present invention.

### MODE(S) FOR CARRYING OUT THE INVENTION

Hereinafter, exemplary embodiments of the present invention will be described with reference to the appended drawings. Embodiments to be described below are an example, and embodiments to which the present invention is applied are not limited to the following embodiments.

The existing technology is appropriately used for an operation of a wireless communication system of an embodiment of the present invention. Here, the existing technology is, for example, the existing LTE but is not limited to the existing LTE. The term "LTE" used in this specification has a broad meaning including LTE-Advanced and schemes after LTE-Advanced (for example, NR) unless otherwise specified.

Also, according to an embodiment of the present invention, a duplex scheme may be a Time Division Duplex (TDD) scheme, may be a Frequency Division Duplex (FDD) scheme, or may be other schemes (for example, Flexible Duplex or the like).

In the following description, a method of transmitting a signal using transmission beams may be digital beam forming that transmits a signal multiplied by a precoding vector (precoded with a precoding vector) or may be analog beam forming that realizes beam forming using a variable phase shifter in a radio frequency (RF) circuit. Similarly, a method of receiving a signal using reception beams may be digital beam forming that multiplies a received signal by a predetermined weight vector or analog beam forming that realizes beam forming using a variable phase shifter in an RF circuit. Hybrid beam forming in which the digital beam forming and the analog beam forming are combined may be applied to transmission or reception. Further, transmitting a signal using transmission beams may be transmitting a signal through a specific antenna port. Similarly, receiving a signal using reception beams may be receiving a signal through a specific antenna port. The antenna port refers to a logical antenna port or a physical antenna port defined in the 3GPP standard. Further, the precoding or the beam forming mentioned above is also called a precoder, a spatial domain filter, or the like.

The method of forming transmission beams and reception beams is not limited to the above method. For example, in a base station device 10 or a user equipment 20 including a plurality of antennas, a method of changing an angle of each antenna may be used, a method in which a method of using a precoding vector and a method of changing angles of antennas are combined may be used, different antenna panels may be switched and used, a method of combining methods of using a plurality of antenna panels together may be used, or other methods may be used. Also, for example, a plurality of different transmission beams may be used in a high frequency band. The use of a plurality of transmission beams is called a multi-beam operation, and the use of one transmission beam is called a single-beam operation.

Further, according to an embodiment of the present invention, when a radio parameter or the like is "configured," it may mean that a predetermined value is pre-configured or may mean that a radio parameter indicated by a base station device 10 or a user equipment 20 may be configured.

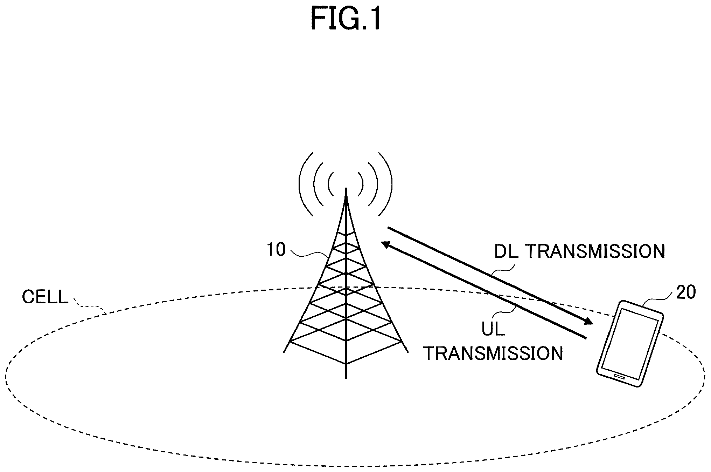

Fig. 1 is a diagram illustrating a wireless communication system in an embodiment of the present invention. The wireless communication system in the embodiment of the present invention includes a base station device 10 and a user equipment 20 as illustrated in Fig. 1. Although one base station device 10 and one user equipment 20 are illustrated in Fig. 1, this is an example, and a plurality of base station devices or a plurality of user equipments may be arranged.

The base station 10 is a communication device that provides one or more cells and performs wireless communication with the user equipment 20. Physical resources of a radio signal are defined by the time domain and the frequency domain, and the time domain may be defined by the number of OFDM symbols, and the frequency domain may be defined by the number of sub-bands or resource blocks. The base station 10 transmits a synchronization signal and system information to the user equipment 20. The synchronization signal is, for example, an NR-PSS or an NR-SSS. Some of the system information is transmitted, for example, through an NR-PBCH and is also called broadcast information. The synchronization signal and the broadcast information may be periodically transmitted as an SS block (SS/PBCH block) configured with a predetermined number of OFDM symbols. For example, the base station 10 transmits a control signal or data to the user equipment 20 in downlink (DL) and receives a control signal or data from the user equipment 20 in uplink (UL). Both the base station 10 and the user equipment 20 can transmit and receive signals by performing beam forming. For example, as illustrated in Fig. 1, the reference signal transmitted from the base station 10 includes a channel state information reference signal (CSI-RS), and a channel transmitted from the base station 10 includes a physical downlink control channel (PDCCH) and a physical downlink shared channel (PDSCH).

The user equipment 20 is a communication device with a wireless communication function such as a smart phone, a mobile phone, a tablet, a mobile terminal, or a machine-to-machine (M2M) communication module. The user equipment 20 uses various kinds of communication services provided by the wireless communication system by receiving a control signal or data from the base station 10 in DL and transmitting a control signal or data to the base station 10 in UL. For example, as illustrated in Fig. 1, the channel transmitted from the user equipment 20 includes a physical uplink control channel (PUCCH) and a physical uplink shared channel (PUSCH).

In New Radio (NR), in order to secure the coverage in a case in which communication is performed using a radio wave of a high frequency range, beam forming is applied in a case in which transmission of data in a physical downlink shared channel (PDSCH), transmission of a control signal in a physical downlink control channel (PDCCH), transmission of a synchronization signal and broadcast information in a synchronization signal/physical broadcast channel (SS/PBCH) block (SSB), or transmission of a reference signal (channel state information reference signal (CSI-RS)/demodulation reference signal (DMRS)) is performed.

For example, it is possible to use 64 beams in a frequency range 2 (FR 2), that is, in a frequency band of millimeter waves of 24 GHz or more, and it is possible to use 8 beams in a frequency range 1 (FR 1), that is, in a sub-6 GHz frequency band.

In a case in which communication is performed using beams, beam management or beam control becomes important. For example, in a case in which there are two beams, it is necessary for the base station 10 to indicate, to the user equipment 20, a beam which is to be used to transmit a signal. A transmission configuration indication (TCI) state is specified to indicate, to the user equipment 20, a beam to be used or to indicate, to the user equipment 20, switching of a beam to be used.

As content to be indicated by the TCI state, Quasi-Co-Location (QCL) indicating that one reference signal (RS) and one channel can be assumed to be the same radio channel or can be assumed to have the same radio characteristics (the same beam) is included. The QCL is specified in Non-Patent Document 1.

For example, in a case in which the reference signal such as the CSI-RS (or the SS/PBCH) and the PDSCH which is a channel for transmitting data are QCL, they have a relationship in which the reference signal and the data are transmitted through the same beam.

### (Quasi Co-Location)

In NR, the following four types of QCLs are supported:
(1) QCL-TypeA: {Doppler shift, Doppler spread, average delay, delay spread};
(2) QCL-TypeB: {Doppler shift, Doppler spread};
(3) QCL-TypeC: {Doppler shift, average delay}; and
(4) QCL-TypeD: {Spatial Rx parameter}.

Of these, TypeA, TypeB, and TypeC are QCL information related to a time/frequency synchronization process, and TypeD is QCL information related to beam control.

### (Beam management)

In NR, the technology of the beam management is employed. In the beam management, at least one of the base station device 10 and the user equipment 20 forms a beam and improves the transmission quality.

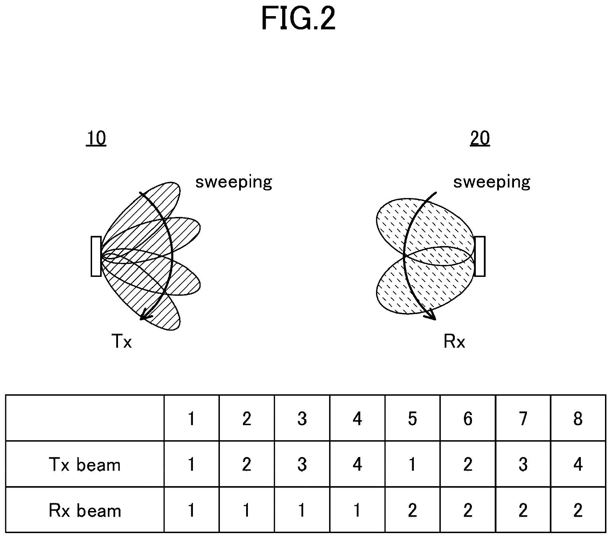

Fig. 2 is a diagram illustrating transmission/reception beam pairs.

For example, in Fig. 2, the base station device 10 on the transmitting side can configure four transmission beams, and the user equipment 20 on the receiving side can configure two reception beams. The base station device 10 performs transmission beam sweeping (sweeping), and the user equipment 20 performs reception beam sweeping. In this case, as illustrated in a table in Fig. 2, eight transmission/reception beam pairs can be configured. An appropriate transmission/reception beam pair is selected from the eight transmission/reception beam pairs.

In the beam management, beam control in which a beam with a large beam width (rough beam), a beam with a small beam width (fine beam), and the like are used in divided stages may be performed.

### (Multi-beam operation)

A multi-beam operation is expected to be implemented by the base station device 10 in the future.

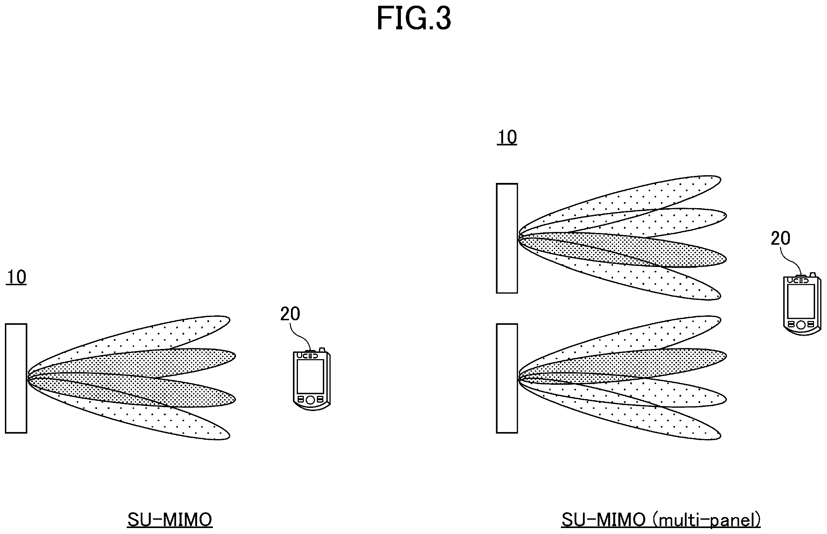

Fig. 3 is a diagram illustrating single user MIMO (SU-MIMO).

In the case of SU-MIMO in which a plurality of beams are transmitted to the same user equipment 20, the beams cause inter-stream interference to each other. For example, in a case in which second and third beams from the top among beams from the base station device 10 are transmitted to the user equipment 20 as illustrated on the left side of Fig. 3, the second beam is a beam (an interference beam or an interfering beam) that causes interference to the third beam. Conversely, the third beam is a beam that causes interference to the second beam. In a case in which the two beams cause inter-stream interference to each other as in this case, it is necessary to select a beam so that a total throughput is maximized.

The beam management based on the assumption that a plurality of beams are used simultaneously is called group-based beam management. In actual transmission, the beam management based on the assumption that one of a plurality of selected beams is used is called non-group-based beam management.

The right side of Fig. 3 illustrates SU-MIMO in a case in which the base station device 10 includes a plurality of antenna panels (multi-panels). As illustrated on the right side of Fig. 3, in a case in which a third beam from the top in an upper antenna panel and a second beam from the top in a lower antenna panel are transmitted to the user equipment 20, the two beams cause inter-stream interference to each other. In other words, the third beam from the top in the upper antenna panel is a beam that causes interference to the second beam from the top in the lower antenna panel, and the second beam from the top in the lower antenna panel is a beam that causes interference to the third beam from the top in the upper antenna panel.

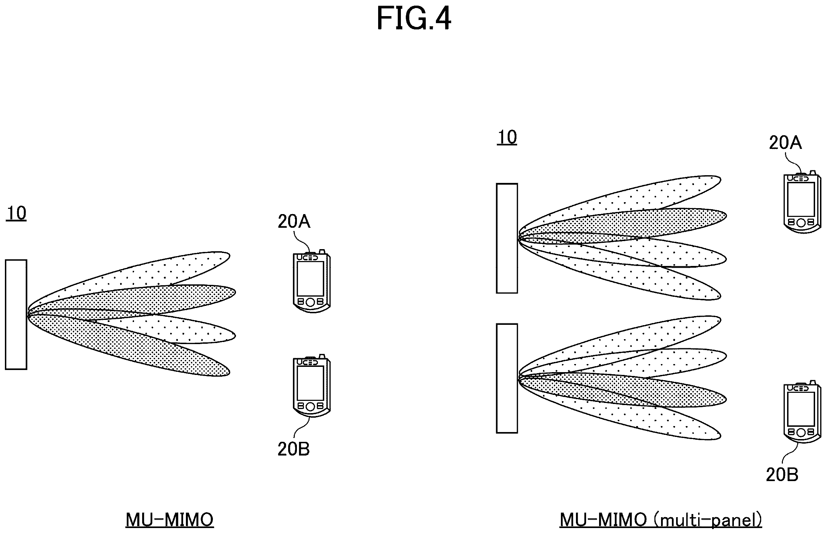

Fig. 4 is a diagram illustrating multi user MIMO (MU-MIMO).

In the case of MU-MIMO in which a plurality of beams are transmitted to a plurality of user equipments 20 (for example, 20A and 20B), the beams become inter-user interference to each other. For example, as illustrated on the left side of Fig. 4, in a case in which a second beam from the top is transmitted to the user equipment 20A and a fourth beam from the top is transmitted to the user equipment 20B, the two beams become inter-user interference to each other. The second beam from the top transmitted to the user 20A is a beam that causes interference to the fourth beam from the top transmitted to the user equipment 20B. Similarly, the fourth beam from the top transmitted to user equipment 20B is a beam that causes interference to the second beam from the top transmitted to the user 20A.

The right side of Fig. 4 illustrates MU-MIMO in a case in which the base station device 10 includes a plurality of antenna panels. As illustrated on the right side of Fig. 4, in a case in which a second beam from the top in an upper antenna panel is transmitted to the user equipment 20A, and a third beam from the top in a lower antenna panel is transmitted to the user equipment 20B, the two beams become inter-user interference to each other. The second beam from the top in the upper antenna panel transmitted to the user equipment 20A is a beam that causes interference to the third beam from the top in the lower antenna panel transmitted to the user equipment 20B. Similarly, the third beam from the top in the lower antenna panel transmitted to the user equipment 20B is a beam that causes interference to the second beam from the top in the upper antenna panel transmitted to the user equipment 20A.

In the case of the inter-user interference illustrated in Fig. 4, it is necessary to reduce reception power of an interference signal while increasing reception quality of a desired signal.

In an embodiment of the present invention, a method of reducing interference received from simultaneously scheduled beams (co-scheduled beams) illustrated in Fig. 4 is provided.

At the same time, as the method of reducing the interference received from the simultaneously scheduled beam, a method in which the user equipment 20A selects a beam with small interference to a beam transmitted to the user equipment 20A, and the selected beams with small interference (for example, transmitted to the user equipment 20B) and the beam transmitted to the user equipment 20A are simultaneously multiplexed is considered. Alternatively, a method in which, when the user equipment 20A selects a beam with small interference, the user equipment 20A selects a beam with small interference in consideration of the reception beam used by the user equipment 20A is considered. The details will be described below.

### (Beam information to be indicated)

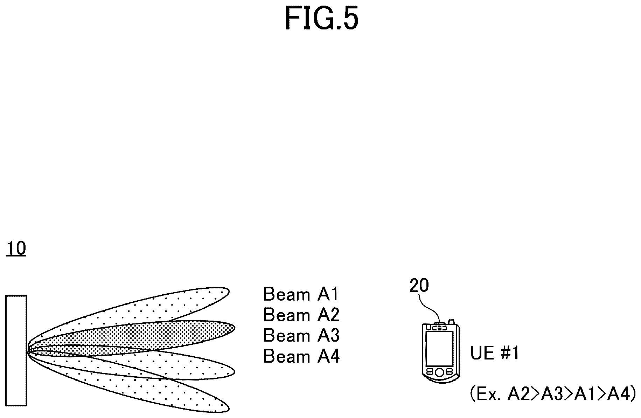

Fig. 5 is a diagram illustrating feedback of beam information according to an embodiment of the present invention.

In the embodiment of the present invention, the user equipment 20 may feed one or more pieces of beam information back to the base station device 10.

For example, the user equipment 20 may feed back information of a desired beam. As an example of a desired beam, information of a beam with good (high) reception quality may be fed back. As illustrated in Fig. 5, in a case in which the reception quality order in the user equipment 20 for a plurality of beams (A1, A2, A3, A4) from base station device 10 is A2> A3> A1> A4, the user equipment 20 may feed back the information of beam A2.

Alternatively, the user equipment 20 may feed back the information of the interference beam. As an example of an interference beam, information of a beam with poor (low) reception quality may be fed back. By feeding back the information of the beam with poor reception quality as an interference beam, the reception power of the interference beam which is simultaneously multiplexed with the desired beam can be reduced. In the example of Fig. 5, information of the beam A4 with poor reception quality may be fed back.

Alternatively, the user equipment 20 may feed back the desired beam and the interference beam. For example, a beam with good reception quality may be feedback as the desired beam, and a beam with poor reception quality may be feedback as the interference beam. In the example of Fig. 5, information of the beam A2 with a good reception quality as the desired beam and information of the beam A4 with a poor reception quality as the interference beam may be fed back.

For example, one or more pairs of the desired beam and the interference beam may be fed back.

Also, the number of desired beams and the number of interference beams to be fed back may be different. For example, the number of desired beams to be fed back may be X, and the number of interference beams may be Y. Here, when X < Y, it can be expected as an effect that the interference power can be reduced while applying an optimal desired beam. When X > Y, it can be expected as an effect that the quality of the desired power can be improved while applying an optimal interference beam.

The three types of feedback (the feedback of the desired beam, the feedback of the interference beam, and the feedback of the desired beam and the interference beam) may be switched and used. The number of desired beams and the number of interference beams to be fed back may be specified in the specification or may be indicated.

In the embodiment of the present invention, the user equipment 20 may feed the beam quality along with the selected beam information back to the base station device 10.

For example, the user equipment 20 may feed back at least one of a Reference Signal Received Quality (RSRQ), a Signal to Interference plus Noise power Ratio (SINR), a Channel Quality Indicator (CQI), and a noise + interference (a component corresponding to an IN of SINR) along with the selected beam information.

The beam quality information may be fed back with the desired beam, may be fed back with the interference beam, or may be fed back with the combination of the desired beam and the interference beam.

In a case in which a plurality of pieces of quality information are fed back, feedback may be performed using differential information. For example, in a case in which the quality information of the beam A2 is fed back, a difference from the quality information of the beam A4 may be fed back.

### (Beam and resources)

In general, in a case in which a signal is transmitted using a transmission beam, precoding, beam forming, a precoder, or a spatial domain filter are applied to a signal using a predetermined resource. For example, a transmission beam to which precoding, beam forming, a precoder, or a spatial domain filter is applied to a reference signal using a CSI-RS resource is transmitted.

In other words, the desired beam and the interference beam can be expressed as a channel resource and an interference resource, respectively. For example, a desired beam candidate and an interference beam candidate may be configured as a channel measurement resource (CMR) and an interference measurement resource (IMR). Alternatively, the desired beam and the interference beam may be configured as a measurement resource without being distinguished.

### (UE pairing)

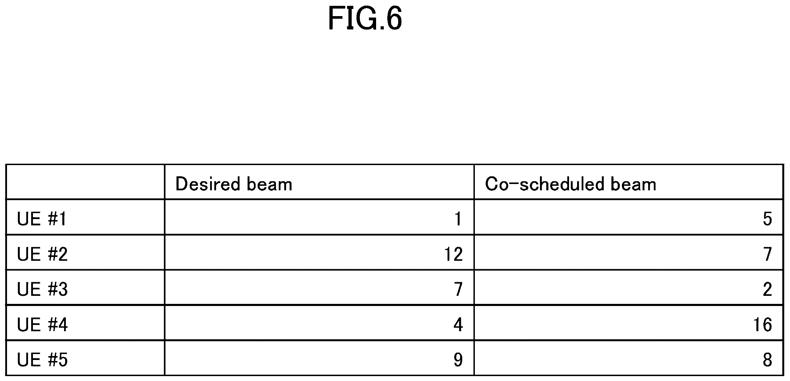

Fig. 6 is a diagram illustrating user equipment pairing (UE pairing) in MU-MIMO. Fig. 6 illustrates an example in which the number of candidate beams is 16.

As illustrated in Fig. 6, as the number of candidate beams increases, it becomes more difficult to create the user equipment pairs (UE pairs) of MU-MIMO. For example, in the example of Fig. 6, a beam number of a desired beam of a first user equipment 20 (UE #1) is 1, and a beam number of an interference beam (co-scheduled beam) is 5. However, among other user equipments 20 (UE #2, UE #3, UE #4, and UE #5), there is no user equipment 20 having a beam number 5 as the desired beam, and the user equipment pair of the user equipment 20 (UE #1) is unable to be created. If each user equipment 20 narrowly restricts the desired beam and the interference beam as described above, it becomes difficult to create the user equipment pair, and it becomes difficult to perform MU-MIMO.

As an embodiment of the present invention, the user equipment 20 may indicate, to the base station device 10, a plurality of desired beam candidates. Further, the user equipment 20 may indicate, to the base station device 10, a plurality of interference beam candidates.

The beams may be grouped.

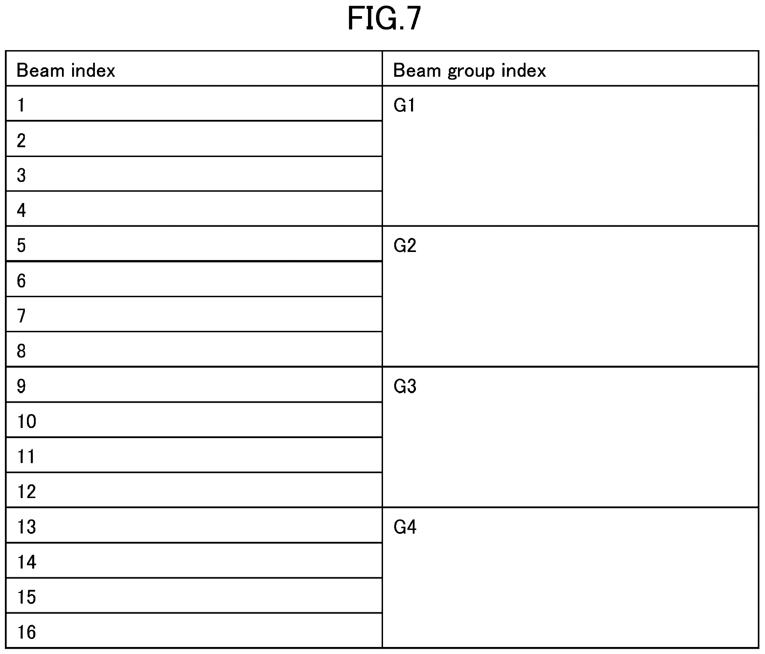

Fig. 7 is a diagram illustrating an example of beam grouping. In the example of Fig. 7, 16 beams are grouped into four beam groups (G1, G2, G3, and G4). For example, the user equipment 20 may indicate a beam group (for example, G1) when indicating the desired beam. Alternatively, the user equipment 20 may indicate the beam group (for example, G2) when indicating the interference beam (co-scheduled beam). As a plurality of desired beams or interference beams are indicated as described above, the number of combination patterns of the user equipment pairings increases, it becomes easier to create the user equipment pairs, and thus it is easier to perform MU-MIMO.

In the example of Fig. 7, 16 beams are grouped into G1, G2, G3, and G4 each having 4 beams in order, but this is an example, and arbitrary grouping may be performed.

An indication of the grouping information of the beam may be given from the base station device 10 to the user equipment 20 through signaling. The information fed back from the user equipment 20 to the base station device 10 may be beam group information.

The user equipment 20 may report up to X best beams and/or worst beams for each group to the base station device 10. Alternatively, the user equipment 20 may report up to X best groups and/or worst groups to the base station device 10.

For example, in the example of Fig. 7, the beam groups G1, G2, G3, and G4 may correspond to a plurality of different base station devices 10. In a case in which X = 1, the user equipment 20 may report one best beam and/or worst beam for each group. Further, the beam groups G1, G2, G3, and G4 may correspond to four antenna panels included in one base station device 10.

Activation is performed through a MAC CE for each beam group, and up to X best beams and/or worst beams in the activated beam groups may be reported to the base station device 10. Alternatively, up to X best beam groups and/or worst beam groups may be reported to the base station device 10.

For example, in a case in which a plurality of beam groups are set by the RRC, the user equipment 20 can assume that an active beam group is designated by the MAC CE, and the designated beam group is used for measurement and reporting.

For example, in a case in which one beam group is set by the RRC, the user equipment 20 can assume that one beam group set by the RRC is used for measurement and reporting without using the MAC CE.

### (Assumption when plurality of beams are fed back)

In the embodiment of the present invention, the user equipment 20 may assume that at least some of a plurality of beams to be fed back are simultaneously multiplexed (simultaneously received when viewed from the user equipment 20). For example, the user equipment 20 may assume that, in a case in which a plurality of desired beams are fed back, the beams are simultaneously multiplexed. Also, the user equipment 20 may assume that, in a case in which a plurality of interference beams are fed back, the beams are simultaneously multiplexed. For example, the user equipment 20 may assume that, in a case in which the desired beam and the interference beam are fed back, the beams are simultaneously multiplexed.

Alternatively, the user equipment 20 may assume that a plurality of beams to be fed back are selectively used. For example, the user equipment 20 may assume that, in a case in which a plurality of desired beams are fed back, some (or one) of the beams are selectively applied. Further, the user equipment 20 may assume that, in a case in which a plurality of interference beams are fed back, some (or one) of the beams are selectively applied.

The user equipment 20 may assume that some of three or more beams to be fed back are simultaneously multiplexed. For example, it may be assumed that the desired beam and the interference beam are simultaneously multiplexed. Alternatively, it may be assumed that desired beams are not multiplexed simultaneously. Alternatively, it may be assumed that interference beams are not simultaneously multiplexed. Alternatively, the number of simultaneous multiplexings of the desired beam may be specified in the specification, or the number of simultaneous multiplexings may be signaled from the base station device 10 to the user equipment 20. Alternatively, the number of simultaneous multiplexings of the interference beams may be specified in the specification, or the number of simultaneous multiplexings may be signaled from the base station device 10 to the user equipment 20.

Alternatively, some or all of the above various assumptions may be switched. The network may give an instruction to perform the switching.

### (Co-scheduled beam)

In the embodiment of the present invention, when a beam is selected, a beam to be applied simultaneously may be assumed. In this case, an indication of beam information to be applied simultaneously may be given from the base station device 10 to the user equipment 20. Also, the beam information to be applied simultaneously may be indicated as the QCL (TCI). The information may be indicated as a beam index.

For example, the user equipment 20 may assume the desired beam and then indicate the interference beam.

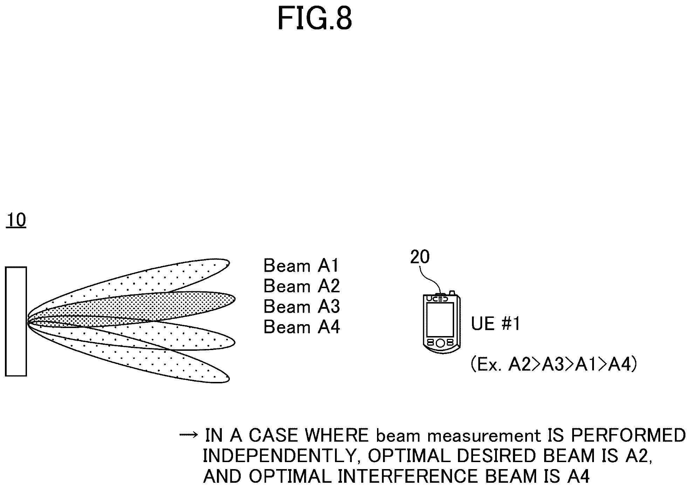

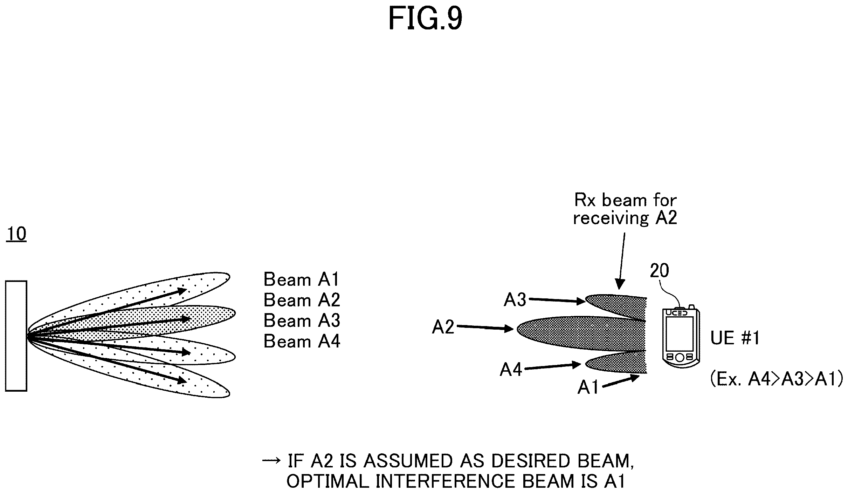

Figs. 8 and 9 are diagrams illustrating examples of the desired beam and the interference beam. In the example of Fig. 8, in a case in which the beam measurement is performed independently without assuming beams to be applied simultaneously, A2 is an optimal desired beam, and A4 is an optimal interference beam. Conversely, in the example of Fig. 9, if A2 is assumed as the desired beam, the optimal interference beam is A1. In other words, as illustrated in the example of Fig. 9, in a case in which A2 is assumed as the desired beam, the user equipment 20 may indicate A1 as the optimal interference beam.

The user equipment 20 may assume a first desired beam and then indicate a second desired beam to be additionally multiplexed.

The user equipment 20 may assume the interference beam and then indicate the desired beam. For example, the user equipment 20 may cause a null reception beam to be directed to the interference beam, select the desired beam, and perform indication.

Information of a plurality of beams (co-scheduled beams) to be applied simultaneously may be signaled from the base station device 10 to the user equipment 20. Information indicating whether a plurality of beams (co-scheduled beams) to be applied simultaneously are desired beams or interference beams may be signaled from the base station device 10 to the user equipment 20.

In a case in which the reception quality is fed back, the reception quality may be fed back after a plurality of beams (co-scheduled beams) to be applied simultaneously are assumed.

Here, in a case in which beams which are likely to be applied simultaneously are temporally separated, multiplexing is likely to be unable to be appropriately assumed. For example, in a case in which beams (for example, CSI-RSs) which are likely to be applied simultaneously are temporally separated and transmitted (for example, one second), the phase rotation temporally occurs, and it is difficult to perform beam measurement in which simultaneous multiplexing is assumed. Therefore, it is desirable that beams which are likely to be applied simultaneously be transmitted using a temporally close resource.

The user equipment 20 may assume that measurement of beams to be simultaneously multiplexed is not configured with a temporally separated resource. For example, the user equipment 20 may assume that a plurality of resources to be measured are included within a certain number of slots (or symbols).

As a method of referring to a plurality of beams (co-scheduled beams) to be applied simultaneously using the QCL information, the QCL information of the interference beam may be associated with the desired beam. This method can be applied in a case in which the interference beam is measured by assuming A2 as the desired beam (the interference beam is measured using a reception beam based on reception of the desired beam A2) for example, as illustrated in Fig. 9. Also, as the method applicable in a case in which the desired beam is assumed by assuming the interference beam, the QCL information of the desired beam may be associated with the interference beam.

### (Capabilities of user equipment 20 (UE capabilities))

In the embodiment of the present invention, it is possible to report the capabilities of the user equipment 20 to the base station device 10.

For example, it may be reported whether or not a capability to report using the beam group is supported. Further, the number of groups that can be supported may be reported. It may be reported whether or not the beam group is activated by the MAC CE. It may be reported whether or not an interference beam report is supported. It may be reported whether or not a report of a pair of desired beam and interference beam is supported. The number of interference beam reports may be reported.

### (Supplement)

The embodiment of the present invention can be applied regardless of the distinction between uplink downlink transmission and reception. In this case, an uplink signal/uplink channel and a downlink signal/downlink channel can be interpreted interchangeably. Further, uplink feedback information and downlink control signaling can be interpreted interchangeably.

In the present disclosure, the description has proceeded mainly on the premise of a channel and signaling scheme of New Radio (NR), but the embodiment of the present invention can be applied to a channel and signaling scheme having similar function as NR, and for example, the embodiment of the present invention can also be applied to LTE/LTE-A or other RATs.

Although various signaling examples have been described above, they are not limited to explicit methods and implicit indication may be performed or uniquely specified definitions may be included in the specification.

Although various signaling examples have been described above, the embodiments are not limited to those described here, and they may use different types of signaling such as the RRC, the MAC CE, the DCI, and the like or may use the MIB, the SIB, and the like.

For example, the RRC and the DCI may be combined, the RRC and the MAC CE may be combined, or all of the RRC, the DCI, and the MAC CE may be combined.

Although the terms such as the beam, the BF RS, and the like are used above, it may be transparent from the base station or the terminal whether the physical signal/channel is beam-formed, and they may be interpreted interchangeably with a signal, a RS, or the like simply. Also, a RS that has been beam-formed may be interpreted as a resource or a RS resource. Also, the beam may be formed in units of antenna ports. Similarly, beam selection can be interpreted interchangeably with resource selection, and the beam index can be interpreted interchangeably with a resource index, an antenna port index, or the like.

The present invention can be applied to the CSI measurement, the channel sounding, the beam management, or the like and can also be applied to other link control such as beam control.

The embodiment and the modification described above can be combined with each other, and the features illustrated in these examples can be combined with each other in various combinations. The present invention is not limited to a specific combination disclosed herein.

### (Device configuration)

Next, an example of a functional configuration of each of the base station device 10 and the user equipment 20 that execute the processes and the operations described above will be described. The base station device 10 and the user equipment 20 include functions for implementing the above-described embodiment. However, each of the base station device 10 and the user equipment 20 may include only some of the functions in the embodiment.

### <Base station device 10>

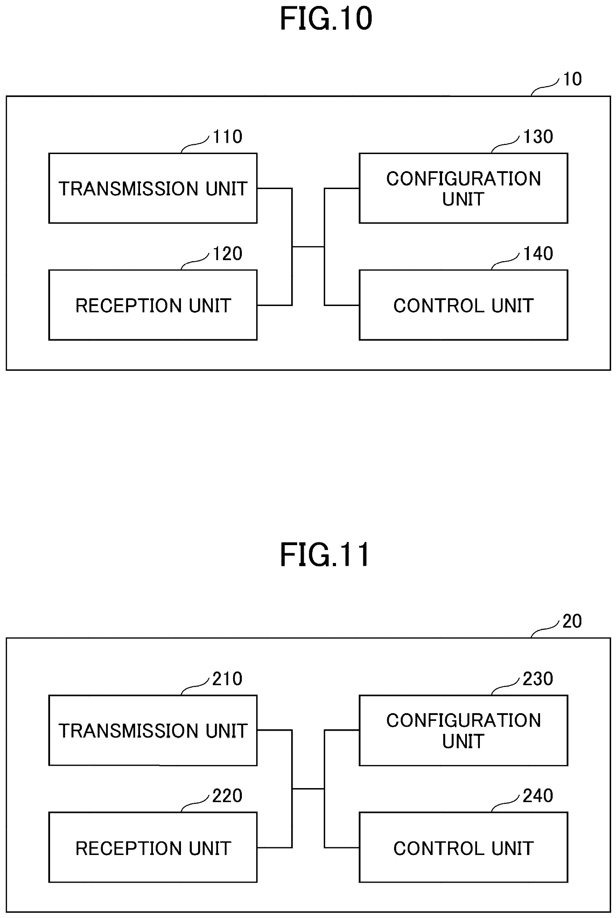

Fig. 10 illustrates an example of a functional configuration of the base station device 10. As illustrated in Fig. 10, the base station device 10 includes a transmission unit 110, a reception unit 120, a configuration unit 130, and a control unit 140. The functional configuration illustrated in Fig. 10 is only an example. A functional classification and names of the functional unit may be any classification and any names as long as the operation according to an embodiment of the present invention can be executed.

The transmission unit 110 includes a function of generating a signal to be transmitted to the user equipment 20 side and transmitting the signal wirelessly. The reception unit 120 includes a function of receiving various kinds of signals transmitted from the user equipment 20 and acquiring, for example, higher layer information from the received signals.

The configuration unit 130 stores various kinds of configuration information configured in advance and various kinds of configuration information to be transmitted to the user equipment 20 in a storage device, and reads them out from the storage device if necessary. For example, content of the configuration information is information or the like related to measurement of the user equipment 20.

The control unit 140 performs a process of generating the measurement settings of the user equipment 20. Further, the control unit 140 performs communication control based on the measurement report acquired from the user equipment 20. A functional unit related to signal transmission in the control unit 140 may be included in the transmission unit 110, and a functional unit related to signal reception in the control unit 140 may be included in the reception unit 120.

### <User equipment 20>

Fig. 11 is a diagram illustrating an example of a functional configuration of the user equipment 20. As illustrated in Fig. 11, the user equipment 20 includes a transmission unit 210, a reception unit 220, a configuration unit 230, and a control unit 240. The functional configuration illustrated in Fig. 11 is only an example. A functional classification and names of the functional unit may be any classification and any names as long as the operation according to an embodiment of the present invention can be executed.

The transmission unit 210 generates a transmission signal from transmission data and transmits the transmission signal wirelessly. The reception unit 220 wirelessly receives various kinds of signals and acquires higher layer signals from received physical layer signals. Further, the reception unit 220 has a function of receiving a DL/UL control signal or the like transmitted from the base station device 10.

The configuration unit 230 stores various kinds of configuration information received from the base station device 10 by the reception unit 220 in a storage device, and reads them out from the storage device if necessary. The configuration unit 230 also stores configuration information configured in advance. For example, content of the configuration information is information or the like related to measurement of the user equipment 20.

The control unit 240 performs the measurement based on the measurement settings acquired from the base station device 10 as described in the embodiment. The control unit 240 reports the measurement result to the base station device 10. A functional unit related to signal transmission in the control unit 240 may be included in the transmission unit 210, and a functional unit related to signal reception in the control unit 240 may be included in the reception unit 220.

### (Hardware configuration)

In the block diagrams (Figs. 10 and 11) used for the description of the embodiment, the blocks of the functional units are illustrated. The functional blocks (configuring units) are implemented by an arbitrary combination of hardware and/or software. A device of implementing each functional block is not particularly limited. In other words, each functional block may be implemented by one device which is physically or logically combined or may be implemented by a plurality of devices, that is, two or more devices which are physically and/or logically separated and are directly or indirectly connected (for example, a wired and/or wireless manner). The function block may be implemented by combining software with the one device or the plurality of devices.

The functions include determining, deciding, judging, computing, calculating, processing, deriving, investigating, searching, confirming, receiving, transmitting, outputting, accessing, resolving, selecting, choosing, establishing, comparing, assuming, expectation, regarding, broadcasting, notifying, communicating, forwarding, configuring, reconfiguring, allocating, mapping, assigning, and the like but are not limited thereto. For example, a functional block (configuring unit) that causes transmission to function is referred to as a transmission unit or a transmitter. In any case, as described above, an implementation method is not particularly limited.

For example, the base station device 10, the user equipment 20, or the like in one embodiment of the present disclosure may function as a computer for processing the present disclosure's wireless communication method. Fig. 8 is a diagram illustrating an example of a hardware configuration of the base station device 10 and the user equipment 20 according to an embodiment of the present disclosure. Each of the base station device 10 and the user equipment 20 may be physically configured as a computer device including a processor 1001, a storage device 1002, an auxiliary storage device 1003, a communication device 1004, an input device 1005, an output device 1006, a bus 1007, and the like.

In the following description, the term "device" can be read as a circuit, device, unit, or the like. The hardware configuration of each of the base station device 10 and the user equipment 20 may be configured to include one or more devices illustrated in the drawing or may be configured without including some devices.

Each function in each of the base station device 10 and the user equipment 20 is implemented such that predetermined software (program) is read on hardware such as the processor 1001 and the storage device 1002, and the processor 1001 performs an operation and controls communication by the communication device 1004 and reading and/or writing of data in the storage device 1002 and the auxiliary storage device 1003.

For example, the processor 1001 operates an operating system and controls the entire computer. The processor 1001 may be configured with a central processing unit (CPU) including an interface with a peripheral device, a control device, an operation device, a register, and the like. For example, the control unit 140, the control unit 240, and the like described above may be implemented by the processor 1001.

Further, the processor 1001 reads a program (program code), a software module, or data from at least one of the auxiliary storage device 1003 and/or the communication device 1004 out to the storage device 1002, and executes various types of processes according to them. A program causing a computer to execute at least some of the operations described in the above embodiment is used as the program. For example, the control unit 140 of the base station device 10 illustrated in Fig. 10 may be implemented by a control program which is stored in the storage device 1002 and operates on the processor 1001. Further, for example, the control unit 240 of the user equipment 20 illustrated in Fig. 11 may be implemented by a control program which is stored in the storage device 1002 and operates on the processor 1001. Various types of processes have been described as being performed by one processor 1001 but may be performed simultaneously or sequentially by two or more processors 1001. The processor 1001 may be implemented by one or more chips. The program may be transmitted from a network via an electric communication line.

The storage device 1002 is a computer readable recording medium and configured with at least one of a read only memory (ROM), an erasable programmable ROM (EPROM), an electrically erasable programmable ROM (EEPROM), a random access memory (RAM), and the like. The storage device 1002 is also referred to as a "register," a "cache," a "main memory," or the like. The storage device 1002 can store programs (program codes), software modules, or the like which are executable for carrying out the communication method according to an embodiment of the present disclosure.

The auxiliary storage device 1003 is a computer-readable recording medium and may be configured with, for example, at least one of an optical disk such as a compact disc ROM (CD-ROM), a hard disk drive, a flexible disk, a magneto-optical disk (for example, a compact disk, a digital versatile disk, or a Blu-ray (registered trademark) disc, a smart card, a flash memory (for example, a card, a stick, or a key drive), a floppy (registered trademark) disk, a magnetic strip, and the like. The auxiliary storage device 1003 is also called an auxiliary storage device. The storage medium may be, for example, a database, a server, or any other appropriate medium including at least one of the storage device 1002 and the auxiliary storage device 1003.

The communication device 1004 is hardware (a transmission and reception device) for performing communication between computers via at least one of a wired network and a wireless network and is also referred to as a "network device," a "network controller," a "network card," a "communication module," or the like. The communication device 1004 may include a high-frequency switch, a duplexer, a filter, a frequency synthesizer, or the like in order to implement at least one of frequency division duplex (FDD) and time division duplex (TDD). For example, a transceiving antenna, an amplifying unit, a transmission and reception unit, a transmission line interface, or the like may be implemented by the communication device 1004. The transmission and reception unit may be implemented by to be physically or logically separated by a transmission unit and a reception unit.

The input device 1005 is an input device (for example, a keyboard, a mouse, a microphone, a switch, a button, a sensor, or the like) that receives an input from the outside. The output device 1006 is an output device (for example, a display, a speaker, an LED lamp, or the like) that performs output to the outside. The input device 1005 and the output device 1006 may be integrated (for example, a touch panel).

The respective devices such as the processor 1001 and the storage device 1002 are connected via the bus 1007 to communicate information with each other. The bus 1007 may be configured with a single bus or may be configured with different buses between the devices.

Further, each of the base station device 10 and the user equipment 20 may be configured to include hardware such as a microprocessor, a digital signal processor (DSP), an application specific integrated circuit (ASIC), a programmable logic device (PLD), or a field programmable gate array (FPGA) or all or some of the functional blocks may be implemented by hardware. For example, the processor 1001 may be implemented using at least one of these pieces of hardware.

### (Conclusion of embodiment)

As described above, according to an embodiment of the present invention, a terminal including a reception unit that receives a plurality of resources from a base station device, a control unit that selects one or more resources among the plurality of resources based on a reception quality of the plurality of resources, and a transmission unit that transmits information of the one or more resources to the base station device is provided.

With the above configuration, it is possible to select an appropriate transmission/reception beam pair as the user equipment feeds back appropriate information in a wireless communication system.

### (Supplement of embodiment)

The exemplary embodiment of the present invention has been described above, but the disclosed invention is not limited to the above embodiments, and those skilled in the art would understand various modified examples, revised examples, alternative examples, substitution examples, and the like. In order to facilitate understanding of the invention, specific numerical value examples have been used for description, but the numerical values are merely examples, and certain suitable values may be used unless otherwise stated. The classification of items in the above description is not essential to the present invention, matters described in two or more items may be combined and used if necessary, and a matter described in one item may be applied to a matter described in another item (unless inconsistent). The boundary between functional units or processing units in a functional block diagram does not necessarily correspond to the boundary between physical parts. Operations of a plurality of functional units may be performed physically by one component, or an operation of one functional unit may be physically performed by a plurality of parts. In the processing procedure described in the embodiments, the order of the processes may be changed as long as there is no inconsistency. For the sake of convenience of processing description, the base station device 10 and the user equipment 20 have been described using the functional block diagrams, but such devices may be implemented by hardware, software, or a combination thereof. Software executed by the processor included in the base station device 10 according to the embodiment of the present invention and software executed by the processor included in the user equipment 20 according to the embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate storage medium.

Further, an indication of information is not limited to the aspect or embodiment described in the present disclosure and may be given by any other method. For example, the indication of information may be given by physical layer signaling (for example, downlink control information (DCI) or uplink control information (UCI)), upper layer signaling (for example, radio resource control (RRC) signaling, medium access control (MAC) signaling, broadcast information (master information block (MIB), system information block (SIB))), other signals, or a combination thereof. Further, the RRC signaling may be referred to as an RRC message and may be, for example, an RRC connection setup message, an RRC connection reconfiguration message, or the like.

Each aspect and embodiment of the present invention may be applied to at least one of Long Term Evolution (LTE), LTE-advanced (LTE-A), SUPER 3G, IMT-advanced, 4th generation mobile communication system (4G), 5th generation mobile communication system (5G), Future Radio Access (FRA), New Radio (NR), W-CDMA (registered trademark), GSM (registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a system using any other appropriate system, a next generation systems extended based on these standards, or the like. Further, a plurality of systems may be combined and applied (for example, a combination of at least one of LTE and LTE-A and 5G or the like).

The processing procedures, the sequences, the flowcharts, and the like of the respective aspects/embodiments described in this specification may be reversed in order unless there is a contradiction. For example, the method described in the present disclosure presents elements of various steps using an exemplary order and is not limited to a presented specific order.

In this specification, a specific operation that is supposed to be performed by the base station device 10 may be performed by an upper node in some cases. In the network including one or more network nodes including the base station device 10, various operations performed for communication with the user equipment 20 can be obviously performed by at least one of the base station device and any network node (for example, an MME, an S-GW, or the like is considered, but it is not limited thereto) other than the base station device 10 and/or the base station device 10. The example in which the number of network nodes excluding the base station device 10 is one has been described above, but other network nodes in which a plurality of other network nodes (for example, an MME and an S-GW) are combined may be provided.

Information, a signal, or the like described in the present disclosure may be output from an upper layer (or a lower layer) to a lower layer (or an upper layer). Information, a signal, or the like described in the present disclosure may be input and output via a plurality of network nodes.

Input and output information and the like may be stored in a specific place (for example, a memory) or may be managed through a management table. Input and output information and the like may be overwritten, updated, or additionally written. Output information and the like may be deleted. Input information and the like may be transmitted to another device.

The determination the present disclosure may be performed in accordance with a value (0 or 1) indicated by one bit, may be performed in accordance with a Boolean value (true or false), or may be performed by a comparison of numerical values (for example, a comparison with a predetermined value).

Software can be interpreted widely to mean a command, a command set, a code, a code segment, a program code, a program, a subprogram, a software module, an application, a software application, a software package, a routine, a subroutine, an object, an executable file, an execution thread, a procedure, a function, and the like regardless of whether software is called software, firmware, middleware, a microcode, a hardware description language, or any other name.

Further, software, commands, information, and the like may be transmitted and received via a transmission medium. For example, when software is transmitted from a web site, a server, or any other remote source using at least one of a wired technology (such as a coaxial cable, a fiber optic cable, a twisted pair, or a digital subscriber line (DSL)) and a radio technology (such as infrared rays or a microwave), at least one of the wired technology and the radio technology are included in a definition of a transmission medium.

Information, signals, and the like described in this specification may be indicated using any one of a variety of different techniques. For example, data, instructions, commands, information, signals, bits, symbols, chips, and the like which are mentioned throughout the above description may be indicated by voltages, currents, electromagnetic waves, magnetic particles, optical fields or photons, or an arbitrary combination thereof.

The terms described in the present disclosure and terms necessary for understanding the present disclosure may be replaced with terms having the same or similar meanings. For example, at least one of a channel and a symbol may be a signal. Further, a signal may be a message. Further, a component carrier (CC) may be referred to as a "carrier frequency," a "cell," or the like.

The terms "system" and "network" used in the present disclosure are used interchangeably.

Further, information, parameters, and the like described in the present disclosure may be indicated by absolute values, may be indicated by relative values from predetermined values, or may be indicated by corresponding other information. For example, radio resources may be those indicated by an index.

The names used for the above-described parameters are not limited in any respect. Further, mathematical formulas or the like using the parameters may be different from those explicitly disclosed in the present disclosure. Since various channels (for example, a PUCCH, a PDCCH, and the like) and information elements can be identified by suitable names, various names allocated to the various channels and the information elements are not limited in any respect.

In the present disclosure, the terms "base station device (BS)," "radio base station device," "base station device," "fixed station," "Node B," "eNode B (eNB)," "gNodeB (gNB)," "access point," "transmission point," "reception point," "transmission/reception point," "cell," "sector," "cell group," "carrier," "component carrier," and the like can be used interchangeably. The base station devices may also be indicated by terms such as a macrocell, a small cell, a femtocell, and a picocell.

The base station device eNB can accommodate one or more (for example, three) cells. In a case in which the base station device accommodates a plurality of cells, the entire coverage area of the base station device can be partitioned into a plurality of small areas, and each small area can provide a communication service through a base station device subsystem (for example, a small indoor base station device (a remote radio head (RRH)). The term "cell" or "sector" refers to the whole or a part of the coverage area of at least one of the base station device and the base station device subsystem that performs a communication service in the coverage.

In the present disclosure, the terms "mobile station (MS)," "user terminal," "user equipment (UE)," "terminal," and the like can be used interchangeably.

The mobile station may be a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, It may also be referred to as a remote terminal, handset, user agent, mobile client, client, or some other suitable term.

At least one of the base station device and the mobile station may be also referred to as a transmitting device, a receiving device, a communication device, or the like. At least one of the base station device and the mobile station may be a device installed in a mobile body, a mobile body itself, or the like. The moving body may be a vehicle (for example, a car, an airplane, or the like), a moving body that moves unmanned (for example, a drone, an autonomous car or the like), or a robot (manned type or unmanned type). At least one of the base station device and the mobile station includes a device which need not necessarily move during a communication operation. For example, at least one of the base station device and the mobile station may be an Internet of things (IoT) device such as a sensor.

The terms "determining" and "deciding" used in this specification may include a wide variety of actions. For example, "determining" and "deciding" may include, for example, events in which events such as judging, calculating, computing, processing, deriving, investigating, looking up, search, and inquiry (for example, looking up in a table, a database, or another data structure), or ascertaining are regarded as "determining" or "deciding." Further, "determining" and "deciding" may include, for example, events in which events such as receiving (for example, receiving information), transmitting (for example, transmitting information), input, output, or accessing (for example, accessing data in a memory) are regarded as "determining" or "deciding." Further, "determining" and "deciding" may include, for example, events in which events such as resolving, selecting, choosing, establishing, or comparing are regarded as "determining" or "deciding." In other words, "determining" and "deciding" may include events in which a certain operation is regarded as "determining" or "deciding." Further, "determining (deciding)" may be replaced with "assuming," "expecting," "considering," or the like.

Terms "connected," "coupled," or variations thereof means any direct or indirect connection or coupling between two or more elements and may include the presence of one or more intermediate elements between two elements which are "connected" or "coupled." The coupling or the connection between the elements may be physical, logical, or a combination thereof. For example, "connection" may be replaced with "access." In a case in which used in the present disclosure, two elements may be considered to be "connected" or "coupled" with each other using at least one of one or more electric wires, cables and/or a printed electrical connection or using electromagnetic energy having a wavelength in a radio frequency domain, a microwave region, or a light (both visible and invisible) region as non-limiting and non-exhaustive examples.

A reference signal may be abbreviated as RS and may be referred to as a pilot, depending on a standard to be applied.

A phrase "based on" used in the present disclosure is not limited to "based on only" unless otherwise stated. In other words, a phrase "based on" means both "based on only" and "based on at least."

Any reference to an element using a designation such as "first," "second," or the like used in the present disclosure does not generally restrict quantities or an order of those elements. Such designations can be used in the present disclosure as a convenient method of distinguishing two or more elements. Thus, reference to the first and second elements does not mean that only two elements can be adopted there, or the first element must precede the second element in a certain form.

Further, "means" in the configuration of each of the above devices may be replaced with "unit," "circuit," "device," or the like.

In a case in which "include," "including," and variations thereof are used in the present disclosure, these terms are intended to be comprehensive, similarly to a term "comprising." Further, the term "or" used in the present disclosure is intended not to be an exclusive disjunction.

In the entire present disclosure, for example, when an article such as "a," "an," or "the" in English is added by a translation, the present disclosure may include a case in which a noun following the article is the plural.

In the present disclosure, a term "A and B are different" may mean "A and B are different from each other." Further, the term may mean "each of A and B is different from C." Terms such as "separated," "coupled," or the like may also be interpreted in similarly to "different."

Each aspect/embodiment described in this specification may be used alone, in combination, or may be switched in accordance with the execution. Further, indication of predetermined information (for example, indication of "being X") is not limited to being performed explicitly, but may be performed by implicit (for example, by giving no indication of predetermined information).

Although the present disclosure has been described above in detail, it is obvious to those skilled in the art that the present disclosure is not limited to the embodiments described in the present disclosure. The present disclosure may be implemented as revised and modified forms without departing from the gist and scope of the present disclosure as configured forth in claims. Therefore, the description of the present disclosure is for the purpose of illustration and does not have any restrictive meaning to the present disclosure.

### EXPLANATIONS OF LETTERS OR NUMERALS

- 10: BASE STATION DEVICE
- 110: TRANSMISSION UNIT
- 120: RECEPTION UNIT
- 130: CONFIGURATION UNIT
- 140: CONTROL UNIT
- 20: USER EQUIPMENT
- 210: TRANSMISSION UNIT
- 220: RECEPTION UNIT
- 230: CONFIGURATION UNIT
- 240: CONTROL UNIT
- 1001: PROCESSOR
- 1002: STORAGE DEVICE
- 1003: AUXILIARY STORAGE DEVICE
- 1004: COMMUNICATION DEVICE
- 1005: INPUT DEVICE
- 1006: OUTPUT DEVICE

## Claims

1. A terminal, comprising:
a reception unit configured to receive a plurality of resources from a base station device;
a control unit configured to select one or more resources among the plurality of resources based on a reception quality of the plurality of resources; and
a transmission unit configured to transmit information of the one or more resources to the base station device.

2. The terminal according to claim 1, wherein the one or more resources includes a plurality of desired resources or a plurality of interference resources.

3. The terminal according to claim 1, wherein the transmission unit transmits the reception quality in addition to the information of the one or more resources.

4. The terminal according to claim 1, wherein the reception unit simultaneously receives at least some of the one or more resources transmitted to the base station device.

5. The terminal according to claim 4, wherein the control unit selects the one or more resources under the assumption that the at least some of the one or more resources are to be simultaneously received.

6. A communication method of a terminal, comprising:
receiving a plurality of resources from a base station device;
selecting one or more resources among the plurality of resources based on a reception quality of the plurality of resources; and
transmitting information of the one or more resources to the base station device.
